# EUROPEAN PATENT APPLICATION

(11) **EP 1 128 300 A1**
(43) Date of publication of application: **29.08.2001**
(21) Application number: 01104144.9
(22) Date of filing: 21.02.2001
(51) Int. Cl.: G06F 17/60

(54) **Sales System in communication network**

(30) Priority: 22.02.2000 JP 2000045226; 01.05.2000 JP 2000133037; 17.10.2000 JP 2000316996
(71) Applicant: Tsuyoshi Senga, Kasugai-shi, Aichi-ken (JP)
(72) Inventor: Tsuyoshi Senga, Kasugai-shi, Aichi-ken (JP)
(74) Representative: Sajda, Wolf E., Dipl.-Phys.

(57) **Abstract**

Purpose: The invention provides a sales system in a communication network whereby a mediator in the network permits a purchase wisher to easily get a chance for purchasing his desired commodity for a lowest possible price and a sales wisher to easily get a chance for selling the same commodity as much as possible.

Configuration: The mediator can receive bids from both of a purchase wisher and a sales wisher to always announce the bidding results with no limits in period and receive changes in the bidding conditions until transaction conclusion, thus changing conditions based on the transaction conclusion state to provide lowest possible purchase prices and highest possible sales prices.

## Description

### BACKGROUND OF THE INVENTION

### Field of the Invention

The invention relates to a sales system in a communication network, for permitting a mediator in the communication network to mediate between a purchase wisher and a seller in selling of commodities.

### Description of the Related Art

The Internet and other communication networks for communication with a personal computer have recently been rapidly pervading corporate plants as well as general homes etc., finding wide applications not only as means just for receiving and transmitting various kinds of information but also in selection, ordering, and sales of various commodities.

In such a known communication network, when a desired commodity is to be purchased by a sales system therein, the purchase wisher confirms the information such as performance, price, etc. of the desired commodity on his computer screen and then inputs and registers the information of his address, name, paying method for paying cost, etc., which information is then transmitted over the communication network to the host computer of the seller, in response to which the commodity is delivered to the address of the purchase wisher, while the cost is paid by the predetermined method such as credit card paying or transfer-to-back-account.

Also, as for over-the-network sales of, for example, a personal computer, there is available a so-called auction type sales system or a reverse-auction type sales system besides a communication sales system with a fixed sales price specified by the seller. That is, by the auction type sales system, first a sales wisher or a mediator sets a lowest bidding price of a commodity to then permit, in the network, purchase wishers to bid on the commodity with a presented purchase wishing amount not less than the lowest bidding price within a predetermined lapse of period, so that at the expiration of the predetermined lapse of period, only the highest bidder can win the purchase right of the commodity. By the reverse-auction type sales system, on the other hand, not a sales wisher but a purchase wisher or a mediator sets a highest bidding price of a commodity to then permit, on the network, sales wishers to bid on the commodity with a presented sales wishing amount not more than the highest bidding price within a predetermined lapse of period, so that at the expiration of the predetermined lapse of period, only the lowest bidder can win the selling right of the commodity.

By those systems, in a case where the commodity is a personal computer, for example, typically the number of articles to be sold at a time is few, so that the purchasers may have an advantage that they can purchase it for a price a little lower than a over-the-counter sales price or a communication sales price or the like, while the sales wishers may have an advantage that they can dispose of inferior-quality inventories in a wider sales market.

By the above-mentioned auction type sales system, however, since the number of articles to be sold is few, a merit of the sales wishers is relatively low. Also, a sales wisher who would like to sell a large number of the same commodity collectively can often get a satisfactory total profit even if the unit price of the commodity is set considerably lower than a unit cost for a small volume sales, so that purchase wishers may get the commodity at such a sales price, to thereby boom the auction as a whole.

### SUMMARY OF THE INVENTION

It is an object of the invention to provide a sales system in a communication network that solves the above-mentioned problems in facilitating a purchase wisher to get a chance of purchasing a commodity at his desired lowest possible price and also in facilitating a seller to get a chance of selling the same commodity as much as possible.

To this end, a sales system on a communication network according to Claim 1 of the invention permits a mediator in the communication network to receives a bid from purchase wishers for purchasing an arbitrary desired commodity at an arbitrary desired purchase price and also to receive a bid from sales wishers for selling an arbitrary desired commodity at an arbitrary desired sales price while posting or presenting their bidding results to both parties, wherein:
the conditions of the wishers which have bid earlier of those transaction wishers are always announced, so that if those conditions agreed with conditions of later bidding other wishers, the transaction is concluded and the conclusion information is always announced and, at the same time, changes in the sales wishers' unconcluded conditions and those in the purchase wishers' unconcluded conditions are received to announce bidding under thus changed conditions and the unconcluded bidding in order to continuously receive the bidding of the other transaction wishers who respond to that bidding, thus always enabling their participation under their desired conditions.

By this system, the bidding from the transaction wishers under their desired conditions can be always announced to maintain the bidding until someone wins a bid at a desired sales price, thus providing the transaction wishers with chances of selecting a bid at their desired lowest and highest possible prices in purchasing and saling respectively.

Although this system supposes a time difference in the conclusion of the conditions agreed upon at the time of the transaction conclusion between an earlier bid and a later bid made by the transaction wishers, it covers also a case of simultaneous bidding with no time difference between the earlier and later bids to treat it as concluded transaction. It also deals with such products as computer software programs and other electric/electronic equipment, foods and other consumables, automobiles, pictures, and other durable consumer goods as well as hardware, real estates, airplane tickets and other traffic tickets, hotel tickets, concert tickets, and other service exchange tickets for sale, bank load rates and deposit rates, subscription commissions for insurance etc., contracted constructions of buildings and civil engineering works, personnel/occupation mediation, and personnel delivery such that required workers maybe delivered in response to a delivery destination and work under their management in maintained employment relationships and wages contracts. With this, as his desired bidding conditions, a purchase wisher registers as a bid three items of information of a commodity he wishes to purchase, information of the purchase wisher himself, and a purchase price the purchase wisher desires to pay for the commodity, while on the other hand the sales wisher registers as a bid three items of information of a commodity he wishes to sell, information of the sales wisher himself, and a sales price he desires to sell for the commodity. With this, the purchase or sales wisher bidding under these desired conditions specifies his desired purchase or sale commodity, to register his desired purchase or sales price as a bit, respectively.

When the product is personnel mediation in particular, the sales wisher bids for detailed information such as a performance and achievements of registered personnel and the desired reward amount, while on the other hand the purchase wishing employer side, a corporate side in many cases, registers a reward as a bid. If a product is mediation of occupations, also, the sales wisher bids for detailed information such as work-place providing corporate size and employment conditions and the desired reward amount, while on the other hand, would-be employees as the sales wishers register their desired reward amount as a bid against those conditions presented. Moreover, if the product is a construction contract, a contact ordering sales wisher registers as a bid detailed conditions such as construction contents and required technologies, detailed information such as size and performance of a relevant corporate, and a contracting amount, while on the other hand, the contract receiving corporate registers as a bid against those conditions his desired contracting amount as a purchase wisher. Or conversely, the contract receiving corporate registers as a bid detailed information such as their performance and technologies and a unit contracting amount as a sales wisher, while on the other hand the contract ordering corporate registers as a bid their desired ordering amount to the bit of the contract receiving corporate for each order as a purchase wisher. Thus, as to services, typically products, the side for providing a service as a sales wisher registers as a bid information of the detailed service contents/service provider and a service providing charge, while the side who wishes to receive the service registers as a bid information of the detailed service contents/service receiving side and a price for the service as a purchase wisher. For each of them, the payable amount for the would-be service receiver or the receivable amount for the would-be service provider is registered as a bid.

Also, in order to input a variety of items at a time as a bid, based on a first input item of ID, the type of the registered person, i.e. either individual or corporation, is fetched from the customers' data file, so that the individual may be provided with such an input screen as to easily input a single type and single number item thereon while the corporation may be provided with such a screen so as to easily input a variety of types and a plurality of number of items thereon.

Also, according to Claim 2 of the invention, for example, the number of product articles may be added as the desired conditions of a purchase or sales wisher to continue the bid for an extra number of articles other than those covered by a concluded transaction so that the sales wisher can wait for the next bid winner for the extra number of articles to thereby get a chance for selling the same products as much as possible by one bid. Such bids added for an extra number for articles can be treated as one bid or, if desired, as an independent bid for a specified number or quantity of articles to be registered as a group and treated in inputting as described in Claim 6, so that when a transaction is concluded for that registered group, the concluded number of articles can be cancelled.

Also, as according to Claim 3 of the invention, a transaction conclusion is posted to both parties who have acquired the transaction right by the above-mentioned conclusion of transaction and, at the same time, the above-mentioned mediator collects as a commission a predetermined percentage of a transaction price from the sales wisher who has acquired the selling right. Thus, as far as a transaction is not concluded, the commission need not be paid to thereby give a chance for participation of a larger number of bidders, thus facilitating the concluding of better transaction conditions.

Also, there may be another commission collecting method whereby the mediator collects membership fees from purchase and sales wishers. There may be such a membership collecting method that collects membership fees at the time of registering, every month, half a year, etc. or for each bid or plurality of bids. With this, it is possible to prevent mischievous bidding and cancellation of a bid after a transaction is concluded.

A sales system on a communication network according to Claim 4 of the invention permits a mediator in the communication network to receive a bid from a purchase wisher for an arbitrary desired commodity at an arbitrary desired purchase price while receiving a bid from a sales wisher for an arbitrary desired commodity at an arbitrary desired sales price at the same time as posting or presenting the results of their bids to both parties, wherein:
the bidding conditions of the above-mentioned sales wisher or those of the above-mentioned purchase wisher are unified in terms of an arbitrary condition so that one or more desired purchase prices or one or more desired sales prices can be bid simultaneously.

By this system, if a commodity is, for example, a computer, and it is new, it can be bid as far as it is guaranteed by its manufacturer even without a guarantee by its sales store, and the purchase wisher often asks for only the purchase price as his selecting condition, so that by permitting all of the purchase wishers to bid for it under this unified condition of a total cost of a delivery fee, a consumption tax, etc., a delivery time limit, and other conditions, a larger number of bid wishers can participate in auction, to generally permit the sales wisher to collect more unspecified purchase wishers and sell them a plurality of commodities, to thereby have higher profits than a case where he would sell one commodity, thus reducing the sales prices than otherwise. The purchase wishers, on the other hand, not only can get a chance of more inexpensive purchase but also can set a higher desired purchase price for a commodity of a scarcity value to purchase it preferentially, thus permitting the seller to easily get higher profits than a usual sales.

In particular, if a bid wisher assumed to have his own credit or priority in celebrity among sales wishers is listed among a large number of other bid wishers, purchase wishers can take into account a sales store's credit, guarantee, and location to bid for even such a commodity or service that he does not consider to be of almost the same value even at the same sales price if he found a listed sales wisher who he can give credit, to thereby collect more sales or purchase wishers, thus booming the price competition.

If, on the other hand, such information as operational credit, guarantee, and location of a sales store is added, even apparently almost the same quality commodity or service is not considered to be so by purchase wishers when their desires differ. Therefore, if desired sales stores are different, even the same commodity may be said to be sold as a seller inherent commodity, so that, as claimed in the above-mentioned Claim 4, even if the total costs including a delivery fee and consumption tax and a delivery time limit or the like are unified for all of the sales wishers, the relevant product cannot be considered to be the same commodity when the sales wishers desire differently, so that a price competition hardly occur among the sellers. If, in particular, there is a plurality of sales wishes for only one purchase wish or there is a plurality of purchase wishes for only one sales wish, no competition occurs, so that one who has that only one purchase or sales wish occupies the auction, thus making it difficult to establish a fair transaction price.

To guard against this, Claim 5 features the sales system in the communication network according to Claim 1, in which a mediator in the communication network receives a bid from a purchase wisher for an arbitrary desired commodity at an arbitrary desired purchase price while he receives a bid from a sales wisher for an arbitrary desired commodity at an arbitrary desired sales price at the same time as posting or presenting their bidding results to both parties, wherein:
a plurality of purchase or sales bids are correlated to the above-mentioned purchase or sales wisher respectively and resistered, so that if a transaction of an arbitrary number of bids of the plurality of bids is concluded, the registered bids other than those of the concluded transaction are cancelled.

Since this system is a sales system in communication network which permits one individual or corporation to make a plurality of bids for one or more desired purchase or sales prices such that if a transaction of an arbitrary number of bids of the plurality of bids is concluded, the bids other than those of the concluded transaction can be registered as a correlated group to be cancelled, if for example a bid is made for a commodity C of two stores A and a commodity D of an occupying store B registered in a group, either one of the two stores A concludes a transaction, the bid for a purchase desired price at the remaining store B is cancelled before the transaction conclusion. That is, by providing a plurality of sales wishes or purchase wishes for only one purchase wish or sales wish respectively, even a commodity of the occupying store B can be treated as different commodities or services, to give rise to a price competition, thus facilitating the conclusion of a fair price transaction.

Since such a communication network that if a transaction of an arbitrary number of bids of a plurality of bids which have been made beforehand is concluded those bids other than the bids of the concluded transaction can be registered as a correlated group to be cancelled must perform a canceling instruction rapidly, rules for transmitting the canceling instruction should preferably be unified over different networks or the same network system may be such that can be used by different network sponsors to transmit the canceling instruction over the networks.

Claim 6 of the invention features the sales system according to Claim 4, in which a plurality of purchase wishing or sales wishing bids is registered in a group beforehand so that when any one of the bids is concluded in transaction the remaining bids are cancelled, to suppose a commodity to be a stock or any other securities brand and a bid to be an order, in order to specialize in the ordering of securities dealing such as stock transaction, thus preventing sudden rise or fall of stocks. That is, by the communication sales system concerning securities dealing in the communication network according to Claim 6, a mediator in the communication network receives a bid from a purchase wisher for an arbitrary desired commodity at an arbitrary desired purchase price while he receives a bid from a sales wisher for an arbitrary desired commodity at an arbitrary desired sales price at the same time as posting or presenting the bidding results of both parties to them, wherein:
a plurality of purchase wishing orders or sales wishing orders is correlated to the purchase wisher or sales wisher respectively and registered, so that when an arbitrary number of orders of the plurality of bids are concluded in transaction, the other orders resistered than those of the concluded transaction are cancelled.

Conventionally, if one country encounters a sudden rise or fall in her stock market, it may often pervade the world stock markets and be expected to cause a turmoil in the world economy in ever increasing scales with increasing linkage of various countries' stock markets caused by advanced communication technologies. Specifically, once a sudden rise or fall develops in securities dealing, a balance is destroyed between the number of purchase wishing orders and that of sales wishing orders, so that no transaction is concluded to cause the anxious order placers to panic, thus further worsening the sudden rise or fall.

To guard against this, by the sales system according to Claim 6, if, for example, a purchase wisher who would like to purchase stocks of only one brand has registered in correlation an order for 1000 stocks for ¥950 of a brand company A at a current price of ¥1000 and an order for 1000 stocks for ¥900 of a brand company B at a current price of ¥950, one of these two orders whichever lowered in current price during a sudden fall is first concluded in transaction and so its transaction result is -presented to the other order placers to thereby sooth them in order to increase relatively the number of the purchase wishing orders of brand which is one-sidedly lowered in price by conventional stock transaction system, thus supporting the market in purchase as a whole.

Also, generally, in contract to a purchase wishing order which can be placed more than one at a time, when an actual stock certificate is sold in a transaction other than a conventional short sales, a sales wishing order can be placed only for 1000 stocks for each 1000 stock certificates, so that the purchase wishing orders become numerous relatively, thus tending to support the price even with concentrated sales orders on one brand. Further, such a system that enables transmission of canceling instructions to a bond market, commodity market, futures market, or new speculative market causes the funds to be biased to the falling markets, thus preventing them from further falling.

### BRIEF DESCRIPTION OF THE DRAWINGS

FIG. is an illustration for explaining a former half of a sales system in a communication network related to an embodiment of the invention;
FIG. 2 is an illustration for explaining a latter half of the sales system in the communication network related to the invention;
FIG. 3 is an illustration for explaining another embodiment of the invention;
FIG. 4 is a display screen for group registration;
FIG. 5 is another display screen for group registration;
FIG. 6 is further another display screen for group registration;
FIG. 7 is a display screen for showing a state where a transaction is concluded partially or in a small number of articles in group registration;
FIG. 8 is a display screen where another screen for transaction conclusion for group registration is formed;
FIG. 9 is a display screen showing a planar layout etc. of concert hall seats;
FIG. 10 is a display screen showing a room layout for each floor in a hotel;
FIG. 11 is a display screen of a list for group registration of responses to bids for concert hall seats;
FIG. 12 is a display screen showing a list of bids on the providing side of lodging facilities such as a hotel;
FIG. 13 is a display screen showing group registration of sales wishing bids for a lodging facility;
FIG. 14 is a display screen showing a list of bidding states of airplane tickets; and
FIG. 15 is a display screen of group registration of sales wishing bids for airplane tickets.

### DESCRIPTION OF THE PREFERRED EMBODIMENTS

The following will describe embodiments of the invention with reference to the drawings. A mediator I having a server in a communication network such as the Internet forms beforehand a market bulletin board for presenting sales information about a variety of commodities, to provide the bulletin board over the Internet to purchase and sales wishers and readers having a terminal.

Next, a number of purchase wishers A, B, and C and a number of sales wishers X, Y, and Z registers their membership beforehand to the mediator I via a personal computer etc. connected to the Internet, to thereby respond from time to time to a bidwith their desired purchase and sales prices and the number of articles to be dealt with for a desired commodity.

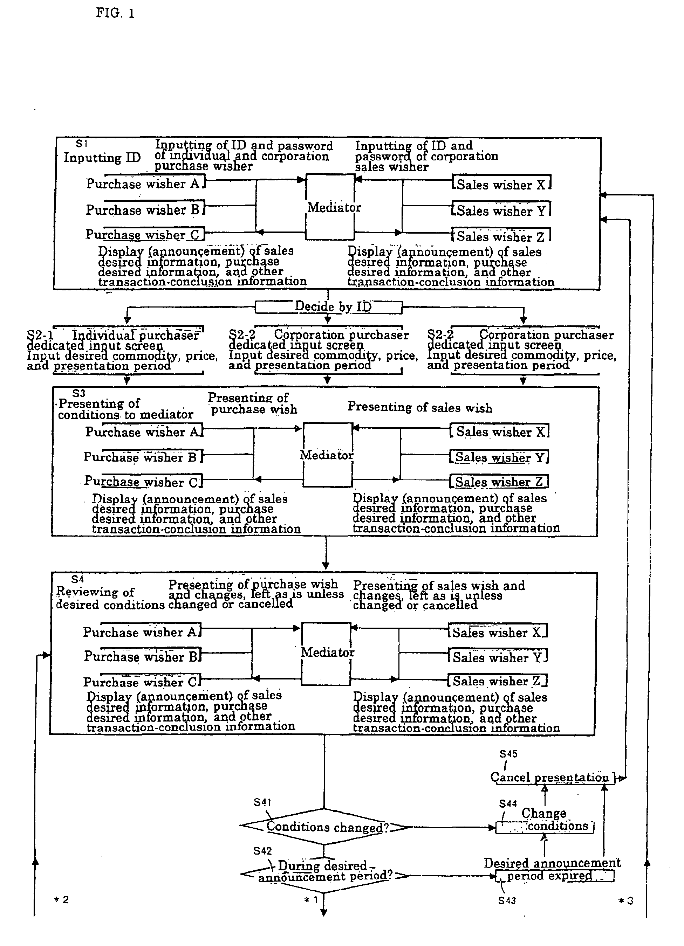

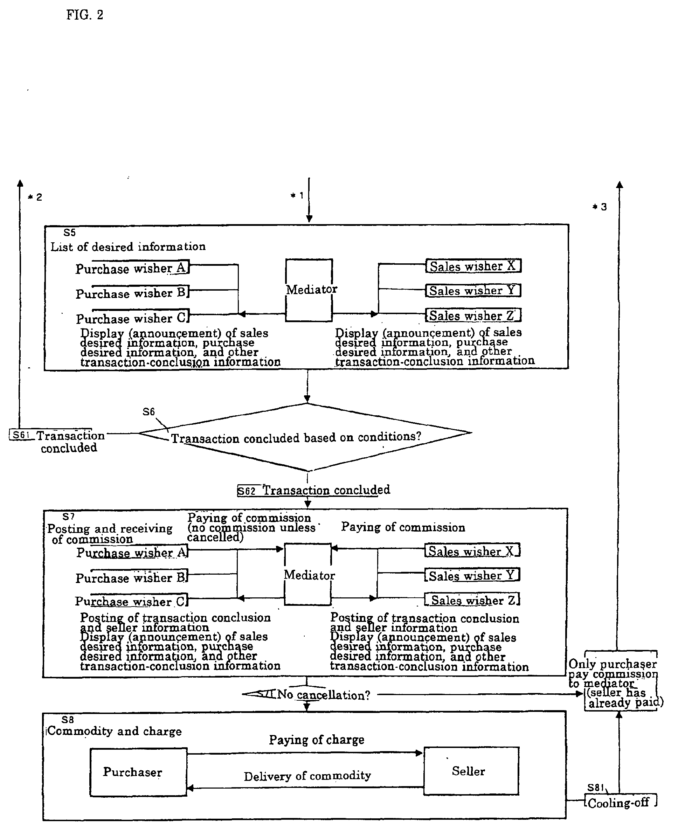

FIG. 1 shows a former half of a procedure for implementing the sale system and FIG. 2, a latter half of it. When a purchase or sales wishing bidder who has registered his membership and has his ID inputs the ID (step S1), it is collated with the member data to display an input screen for commodity information for each of an individual and a corporation (steps, S2-1, S2-2, and S2-3). The individual member inputs a few kinds of commodities in a small number of articles, whereas the corporation member inputs a large number of commodity kinds and articles, so that they cannot efficiently be dealt with in a form of an individual. To guard against this, to input a large number of commodity kinds and a plurality of articles on one screen, it has a number of commodity columns and is capable of inputting the number of articles in three to four digits.

If the member database has therein the bidding conditions which have already been input in the registered ID but not concluded in transaction, its list is displayed to select modification or new entry of the contents thereof. If the new entry option is selected, each column on the input screen has a blank output in it and if the modification option is selected, selected one bidding condition is output to each column as the initial state, which is appropriately modified to thereby simplify the inputting jobs.

The bidding condition thus newly input or modified is presented to the mediator I via the Internet (step S3) to be saved at the server and, at the same time, confirmed on the input screen again (step S4) . Then, it is decided whether a desired announcement period is expired (step S41) and whether it is modified (step S42), so that any bid beyond the desired announcement period (step S44) or any bid modified (step S43) is cancelled (step S45).

The mediator roughly divides the bid-responding conditions into commodity-related, purchase-related, and sales-related conditions and gives them priorities in an descending amount order to the purchase desired conditions, in an ascending amount order to the sales desired conditions, and a time-lapsing order of the bid-responding time for the same amounts so as to provide a transaction conclusion order and then present via the Internet a list thereof to the users other than the mediator I (step S5).

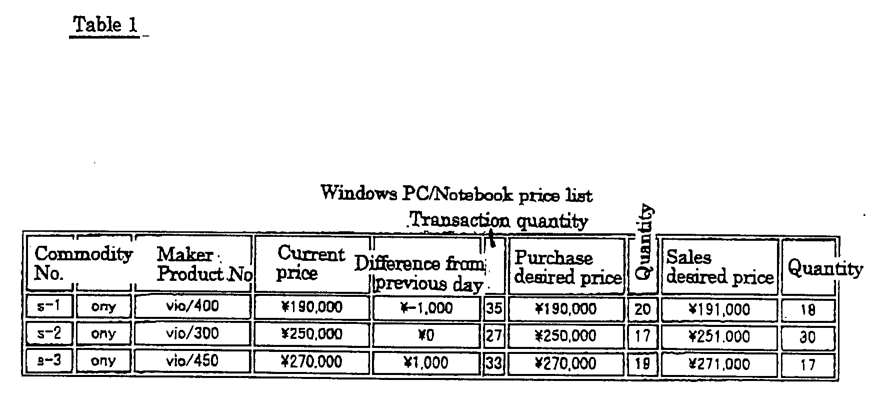

To read an individual detailed bidding state in the list of all the purchase and sales desired conditions, its commodity number can be specified.

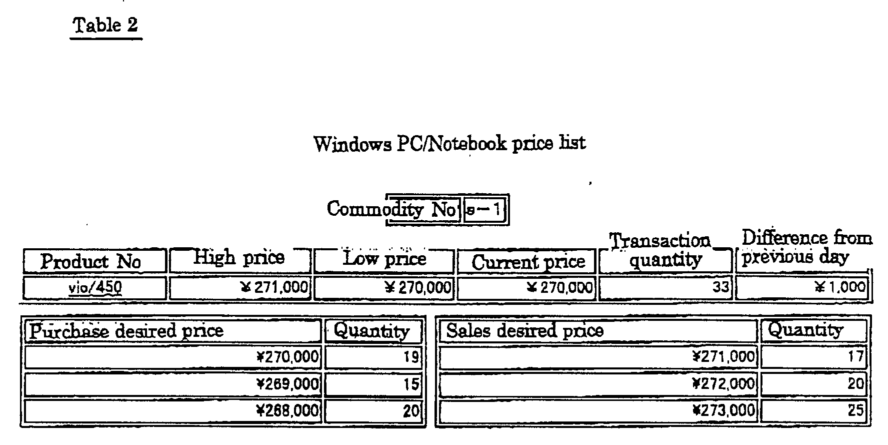

The bidding conditions for incorporeal things such as real estate dealing or mediation of personnel or occupation are listed below.

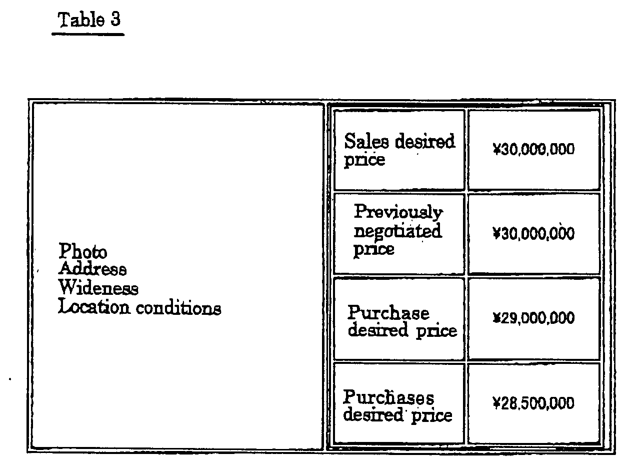

The conditions listed above are for sales desired bids of real estate transactions. The left column has a photo etc. stuck in it to facilitate the understanding of the location conditions such as a size etc. of the real estate. Another display scheme displays a landscape through the window, a video image, a list of room numbers, and an interior of each room for easy comparison of their differences. The price of the rooms is different according to differences in the through-the-widow view at various view levels in the room like in the case of lodging fees or utilization fees of lodgings, so that if a thing to be sold is a lodging fee, for example, the through-the-window view can be displayed when the detailed are desired.

In the right column of the above table, sales desired prices are given in the top row. The previously negotiated price in the second row indicates a transaction negotiated price unconcluded which is presented by the sales wishing bidder and is used as a standard. The lower two rows indicate the highest two prices of purchase wishing bids.

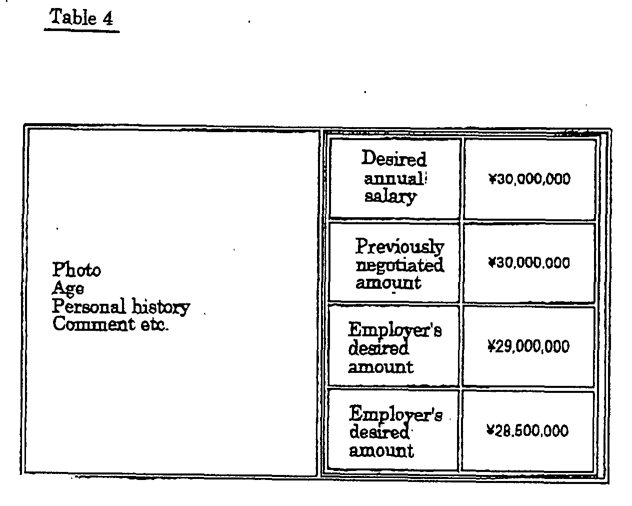

Table 4 presents a person registered for personnel mediation. The left column has a face photo etc. stuck in it and an age, personal history, and comment of the relevant person. The right column has his desired annual salary in the top row. The previously negotiated price in the second row indicates a negotiated annual salary unconcluded which is presented by the sales wishing bidder and is used as a standard. The lower two rows indicate the highest two prices bid by a would-be employer corporate. These are likely to be utilized by those with special skills.

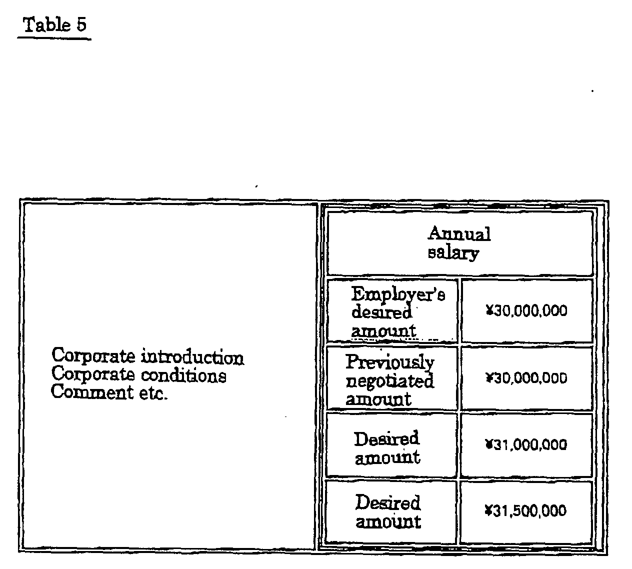

Table 5 lists those registered for occupation mediation. The left column indicates the corporate introduction and employment conditions and the personnel department comment etc. The right column indicates the employment annual salary in the top row. The previously negotiated price in the second row indicates a negotiated annual salary unconcluded which is presented by the sales wishing bidder and is used as a standard. The lower two rows indicate the highest two employment wisher's desired bid amounts. Those items are utilized not only by the society members but also by students, housewives, etc.

Thus, the transaction covers a wide range of items, which are bid for, so that when sales and purchase wishing conditions for the same commodity are bid later for purchase and sales wishing conditions for bids made earlier, the transaction is decided for conclusion (step S6). If the transaction is not concluded (step S61), control returns to the confirmation screen step to change or cancel the sales and purchase wishing conditions bid later (step S4). In this case, it is also possible to keep the bidding conditions unchanged, to thereby made a newbid in response to these remaining bids. If, the transaction is concluded, on the other hand, (step S62), the mediator notifies both parties who have acquired the transaction right of transaction conclusion and their respective contacting destinations and, at the same time, collects as the commission a predetermined percentage of a transaction price from a sales wisher who has acquired the selling right (step S7). The commission can be collected simply and surely by transfer from the credit card account which is contacted at the time of registration. If the transaction is cancelled as a result of notification (step S71), the registration of the person who has cancelled is absolved to make feedback to that effect to the ID inputting step in order to disable bid responding by use of that ID (step S72).

Afterward, without intervention of the mediator, both parties who have acquired the transaction right communicate with each other in checking the methods for paying charges and delivering commodities and then pay the charges and deliver the commodities (step S8). Since actual transactions can mutually be checked by the parties concerned, it is possible to prevent such troubles as unpaid charges, undelivered commodities, etc. Also, in the case of personnel or occupation mediation, even if a bid is concluded in transaction, unlike commodities the personnel cannot correctly be examined until actual interview in various respects, so that such a procedure is employed that both parties who have acquired the transaction right communicate with each other in interview and then confirm the method of paying salaries, i.e. charges of job provision and the working conditions.

In the above, although the credit card transfer method is exemplified as the commission collectingmethod, other paying methods such as bank pay-in may be employed. Also, a cooling-off method is employed, whereby within a certain period from the time of commodity delivery, the purchase wisher can return the commodity (step S81).

The following will describe the decision conditions for transaction conclusion at the above-mentioned decision step S6. Bids provided with a priority order at the listing step S5 directly provide transaction-concluded prices if the conditional amounts are equal to each other, so that the transaction is concluded for a smaller number of articles to be dealt with, leaving the bids for the remaining number of articles with the amount conditions left as they are. In this case, the conditions can be changed and the bids can be cancelled by the bidder arbitrarily as they desire if the transaction is not yet concluded, to newly announce thus changed bidding conditions in the bidding list, waiting for a next bid response.

Next, in the case where the amounts are not equal, if the later presented purchase desired price is higher than the earlier presented sales desired price, the sales desired price provides a transaction-concluded price. Otherwise, the transaction is not concluded.

Similarly, if the later presented sales desired price is lower than the earlier presented purchase desired price, the purchase desired amount provides the transaction-concludedprice. Otherwise, the transaction is not concluded.

Next, decision is made under conditions which may be concluded if a certain time lapse is given, and is made based on comparison to the previously concluded transaction price if both parties bid simultaneously.

The following will describe a case, for example, where the sales desired price is ¥901 and the purchase desired price is ¥1000. First, the previously concluded transaction prices are supposed to have been ¥800, ¥920, and ¥1100 as given below.

### (Price list 6)

Sales desired price Previously concluded transaction price Purchase desired price

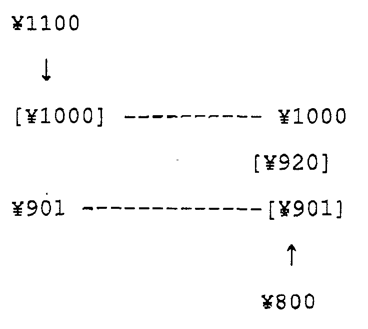

If the previously concluded transaction price is ¥920, which is higher than the sales desired price and lower than the purchase desired price, the previous price provides a transaction-concluded price of ¥920. Next, if the previously concluded transaction price is ¥800, which is lower than the sales desired price, the sales desired price provides the transaction-concluded price of ¥901. If the previously concluded transaction price is higher than the purchase desired price, the purchase desired price provides the transaction-concluded price of ¥1000.

Finally, if there is no previously concluded transaction price available, an intermediate price of the sales desired price of ¥901 and the purchase desired price of ¥1000 is provided and, if the intermediate price, e.g. ¥950.5, has a fraction, a difference amount of ¥99 is halved and its fraction is truncated to be added to the sales desired price to provide a transaction-concluded price of ¥950.

Also, if, for one sales desired price, there are two higher purchase desired prices H and L in bidding simultaneously, the sales desired price and only the purchase desired price H are selected for transaction conclusion to determine a transaction-concluded price as follow.

For example, it is supposed that the sales desired price is ¥1000 and the purchase desired prices are L: ¥1100 and H: ¥1400. If there is no previously concluded transaction price available, the lower purchase desired price of L: ¥1100 provides a transaction-concluded price. The following will describe a case where the previously concluded transaction price are ¥600, ¥1200, and ¥1500.

### (Price list 7)

Sales desired price Previously concluded transaction price Purchase desired price

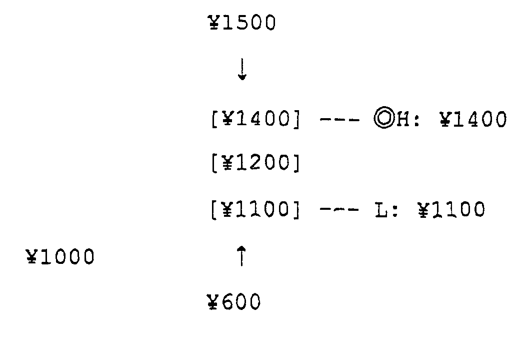

If the previously concluded transaction price is higher than the purchase desired price L and lower than the purchase desired price H, the transaction-concluded price is equal to the previously concluded transaction price, i.e. ¥1200. Next, if the previously concluded transaction price is higher than the purchase desired price H, the purchase desired price H provides the transaction-concluded price of ¥1400. If the previously concluded transaction price is lower than the purchase desired price L, the purchase desired price L provides the transaction-concluded price of ¥1100.

If, opposite to the previous case, sales and purchase are reversed in occurrence order and two bids for sales desired prices H and L are made simultaneously for one purchase desired price, the purchase desired price and only the lowest sales desired price L are concluded in transaction to determine a transaction-concluded price as follows.

It is, for example, supposed that the purchase desired price is ¥1000 and the sales desired prices are L: ¥500 and H: ¥900. If there is no previously concluded transaction price available, the higher sales desired price H: ¥900 is selected as the transaction-concluded price. The following will describe a case where the previously concluded transaction prices is ¥400, ¥600, and ¥1100 .

### (Price list 8)

Sales desired price Previously concluded transaction price Purchase desired price

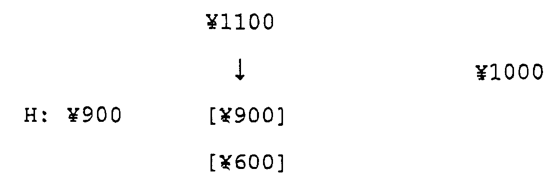

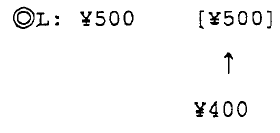

If the previously concluded transaction price is higher than the sales desired price L and lower than the purchase desired price H, the transaction-concluded price is equal to the previously concluded transaction price of ¥600. Next, if the previously concluded transaction price of ¥400 is lower than the sales desired price L, the sales desired price L provides the transaction-concluded price of ¥500. If the previously concluded transaction price of ¥1100 is higher than the sales desired price H, the sales desired price H provides the transaction-concluded price of ¥900.

If, further, a plurality of bids is made in both sales and purchase simultaneously and a plurality of purchase desired prices H and L is bid for a plurality of sales desired prices H and L, only the lowest sales desired price and the highest purchase desired price are concluded in transaction to determine a transaction-concluded price as follows.

### (Price list 9)

| Sales desired price | Purchase desired price |
|---|---|
| ¥900 1 pc. | |
| ¥800 1 pc. | ⓞ¥800 5 pcs. |
| ¥700 2 pcs. | ¥700 3 pcs. |
| ⓞ¥600 4 pcs. | ¥600 4 pcs. |
| | ¥500 2 pcs. |

A difference of the number of articles for the lowest sales desired price of ¥600, which is four, and the number of articles for the highest purchase desired price of ¥800 is one for the purchase desired price of ¥800. The criteria for selecting bids from among the five articles of the purchase wishing conditions is based on the principle of a time-lapsing order of bidding.

### (Price list 10)

| | |
|---|---|
| Sales desired price | Purchase desired price |
| ¥900 1 pc. | (¥800 5 pcs.) |
| ¥800 1 pc. | Δ¥800 1 pc. |
| ¥700 2 pcs. | ¥700 3 pcs. |
| (¥600 4 pcs.) | ¥600 4 pcs. |
| | ¥500 2 pcs. |

If the desired price of the remaining number of articles is a purchase desired price, the difference of the number of articles of the next lowest sales desired price of ¥700 for the purchase desired price of ¥800 is one article of the sale desireds price of ¥700.

### (Price list 11)

| | |
|---|---|
| Sales desired price | Purchase desired price |
| ¥900 1 pc. | |
| ¥800 1 pc. | (¥800 5 pcs.) |
| ¥700 1 pc. Δ | ¥700 3 pcs. |
| (¥700 1 pc.) | ¥600 4 pcs. |
| (¥600 4 pcs.) | ¥500 2 pcs. |

If the desired price of the remaining number of articles is a sales desired price, the difference of the next higher purchase desiredprice of ¥700 for the sales desired price of ¥700 is two articles of the purchase desired price of ¥700.

### (Price list 12)

| Sales desired price | Purchase desired price |
|---|---|
| ¥900 1 pc. | (¥800 5 pcs.) |
| ¥800 1 pc. | (¥700 1 pc.) |
| (¥700 2 pcs.) | Δ¥700 2 pcs. |
| (¥600 4 pcs.) | ¥600 4 pcs. |
| | ¥500 2 pcs. |

Such a transaction conclusion process is repeated until there is no bid available of purchase desired price higher than the sales desired price.

As a result, first if the sales desired price is equal to the purchase desired price finally, that price is determined to be a transaction-concluded price. Thus, six bids for the sales desired prices and six bids for the purchase desired prices used in transaction conclusion processing until the transaction conclusion makes up a uniform transaction-concluded price of ¥700.

Second, when in the case of no same price in contrast to the first case, i.e. both of the remaining highest purchase desired price and the lowest sales desired price are between the last difference-processed sales desired price and purchase desired price, a transaction-concluded price is determined by a decision method taking into account the previously concluded transaction price.

For example, as in the following case, a transaction is concluded for two articles and there has been no bid for any purchase desired price higher than the sales desired price, and, as a result, the remaining highest purchase desired price of ¥800 and the lowest sales desired price of ¥700 are between the last difference-processed sales desired price of ¥900 and purchase desired price of ¥600.

### (Price list 13)

Sales desired price / Previously concluded transaction price / Purchase desired price

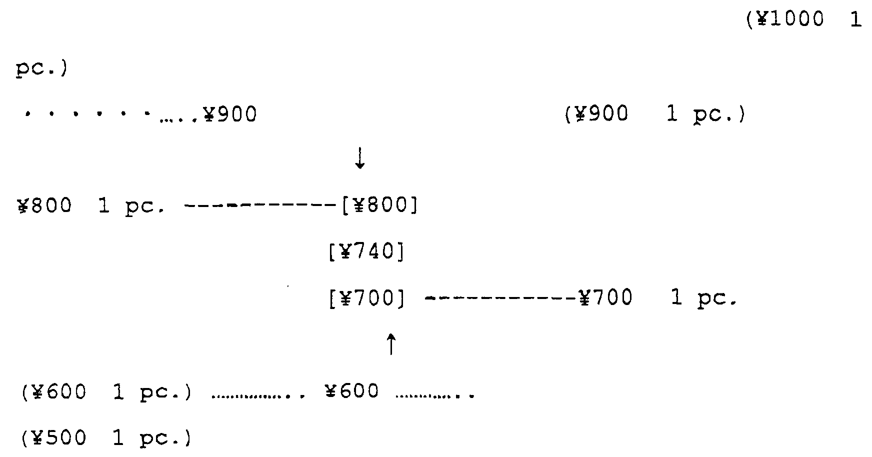

First, there was a previously concluded transaction price and if its amount of ¥740 is higher than the remaining purchase desired price of ¥700 and lower than the remaining sales desired price of ¥800, a transaction-concluded price is ¥740 which is equal to the previously concluded transaction price. Next, if the previously concluded transaction price of ¥600 is lower than the remaining purchase desired price of ¥700, that purchase desired price provides the transaction-concluded price of ¥700. If the previously concluded transaction price of ¥900 is higher than the remaining sales desired price of ¥800, the remaining sales desired price provides the transaction-concluded price of ¥800 Finally, if there is no previously concluded transaction price available, an intermediate price of ¥750 between the sales desired price of ¥800 and the purchase desired price of ¥700 is set as the transaction-concluded price, so that if the intermediate price has a fraction, the fraction of a half of the difference is truncated to add the half price to the sales desired price to provide the transaction-concluded price. Thus determined price provides a parenthesized transaction-concluded price for two articles of concluded transactions.

By the third decision method, when there is no same price in contrast of the first decision case and at least one of the remaining highest purchase desired price and the lowest sales desired price is not between the last difference-processed sales desired price and purchase desiredprice, the transaction-concludedprice is determined by the decision method taking into account the previously concluded transaction price for the already described simultaneous bidding.

For example, in a state where there are two concluded transactions as follows and there has been no bid for a purchase desired price higher than the sales desired price, at least one, both in the following case, of the remaining highest purchase desired price of ¥1000 and the lowest sales desired price of ¥500 is not between the last difference-processed sales desired price of ¥900 and purchase desired price of ¥600.

### (Price list 14)

Sales desired price / Previously concluded transaction price / Purchase desired price

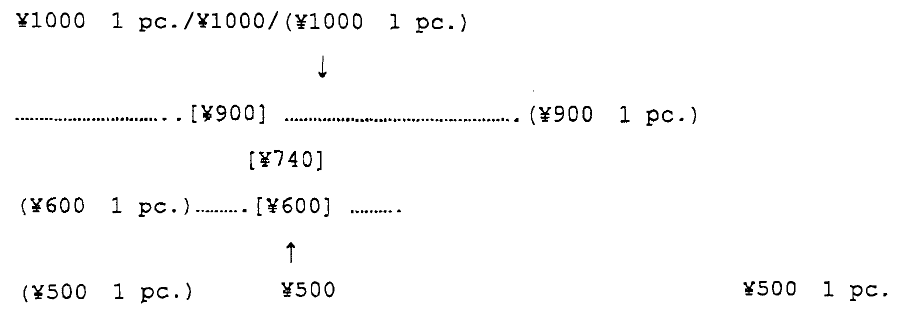

First, there was a previously concluded transaction price and if its amount of ¥740 is lower than the last transaction-concluded purchase desired price of ¥900 and higher than sales desired price of ¥600, the transaction-concluded price is equal to the previously concluded transaction price of ¥740 Next, if the previously concluded price of ¥500 is lower than the last transaction-concluded sales desired price of ¥600, that sales desired price provides the transaction-concluded price of ¥600. With this, the previously concluded transaction price of ¥1000 becomes the transaction-concluded price of ¥900. Finally, if there is no previously concluded transaction price available, an intermediate price of ¥750 between the last transaction-concluded sales desired price of ¥600 and purchase desired price of ¥900 is set as the transaction-concludedprice, so that if it has a fraction, the fraction of a half of the difference is truncated to add the half to the sales desired price in order to provide the transaction-concluded price. Thus determined price provides parenthesized the transaction-concluded price for two concluded transactions.

If a desired price and a transmission time are the same for a plurality of sales conditions or for their bid, the mediator I can decide to give priority on either of them. Also, for example, in order to activate the system for initiating a transaction, all the bidding conditions received from the time of bid starting to the time of transaction starting are taken to have been presented, so that in a case of a plurality of sales desired prices and one purchase desired price or a case of a plurality of purchase wishers and one sales wisher, the transaction is concluded according to the above-mentioned decision conditions.

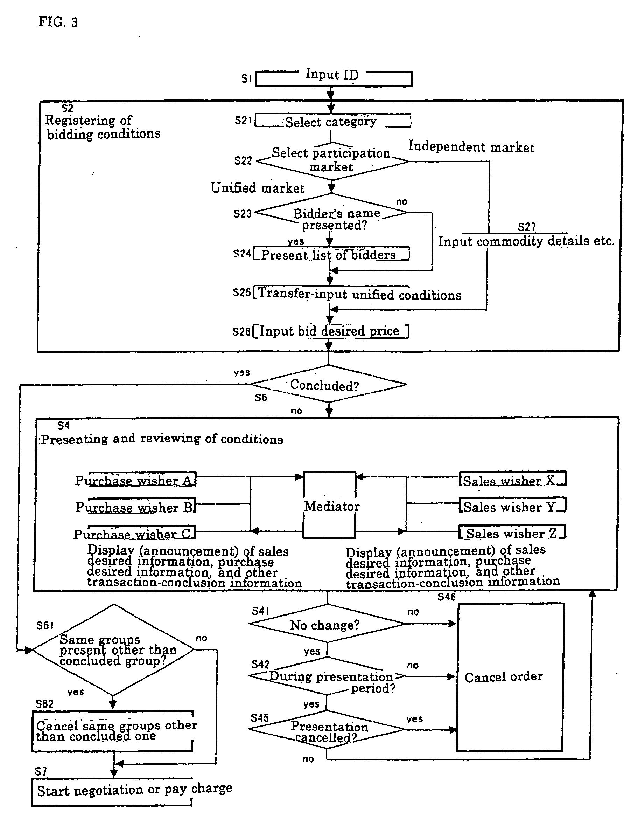

The following will describe another embodiment with reference to FIG. 3.

FIG. 1 shows detailed inputs of a commodity of bidding conditions, so that the more detailed the commodity explanation, the more unlikely is the price competition to occur because the same market as other bids is formed.

To guard against this, as shown in FIG. 3, the commodity conditions can be unified to some extent to increase individual bids in order to cause an appropriate price competition. First, an ID is input and confirmed (step S1) and a bidding category is selected (step S21). An independent market or a unified market is selected from a list of participating markets (step S22) . Next, list the names of bidders and permits them to select whether they wish to be presented in an unspecified situation (step S23). By this method of listing the bidders' names to present them in an unspecified situation, as indicated in Table 6, a plurality of sales stores' names in the top row, so that there are provided a sales wish by participating two stores or more to give a credit to some extent.

**Table 6**

| List of sales participants | Stores A, B, C, D, E, F, G, H, I |
|---|---|
| Address | Aichi Pref. |
| Contact destination | 03-************ Commodities are delivered within fours days after charge transfer is confirmed (transfer to sales store) |
| Commodity delivery | |
| Pay (bank transfer) | Paid charge = purchase desired price + consumption tax + delivery fee + transfer commission |
| Paying (cash on delivery) | Paid charge = purchase desired price + consumption tax + delivery fee + cash-on-delivery commission |
| Cancellation | Commodities can be returned to sales stores within eight days (not beyond this) after they are delivered. No cancellation possible after they are unpacked. Cancelled if no transfer is made within five days from notification of transaction conclusion or if no contacting is made within, five days after notification of transaction conclusion. |
| Delivery free upon cancellation etc. | Delivery fee to be paid by purchaser |
| Guarantee | In accordance to maker guarantees. For details, contact a sales stores, which will notify you of transaction conclusion. |

If the bidder's name is not to be displayed at step S23, the same registration pattern as that in FIG. 1 is provided, so that the bidding desired conditions are registered such as details of commodity contents and presentation desired period (step S25) and a bidding desired price is registered last (step S26).

The unified commodity conditions may include the second row and subsequent in Table 6 such as delivery date, paying method, cancellation period, delivery fee to be paid, guarantees, and such contents in Table 7 below as mediator's commission amount and delivery fee amount.

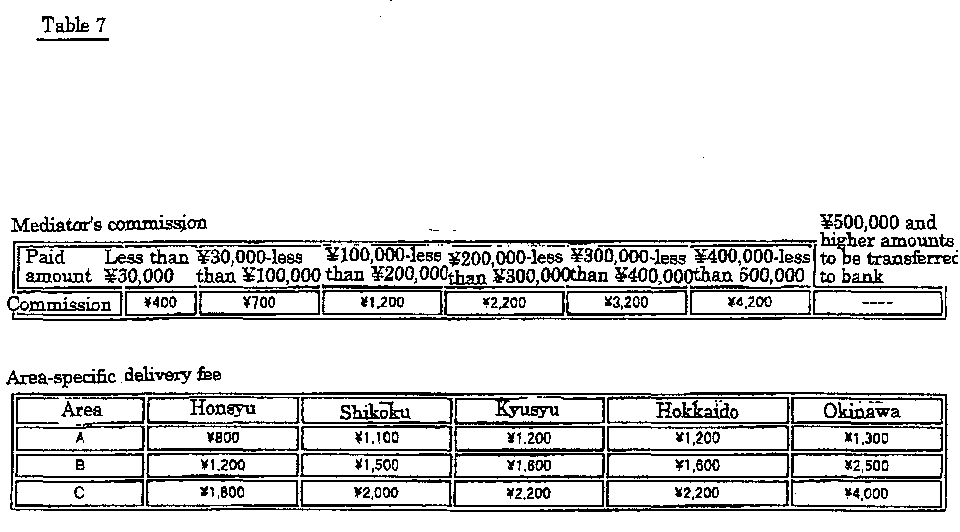

If an individual market is selected at the step of participating market selection (step S22), the input screen shown in FIG. 1 is displayed that is capable of inputting all the desired conditions of the bidder (step S27), so that only the remaining bidding desired price can be input (step S26) to complete the registration of the bidding desired conditions. In this case, on the selection screen for individual conditions, the input screen can be activated for those who want to set individual conditions newly not from the list.

The bidding conditions registered respectively in those unified and individual markets are indiscriminately subject to comparison and decision for transaction conclusion (step S6), so that in the case of an unconcluded transaction, like at step S4 in FIG. 1, the bidding conditions can be reviewed (step S4), so that as a result, the bidding conditions can be changed or cancelled arbitrarily (steps S41 and subsequent). Although FIG. 1 shows a flow that the reviewing step S4 is set immediately before the sales concluding step 6 to make feedback to step S4 in the case of unconcluded transaction, the reviewing step S4 may be set immediately before the transaction concluding step 6 in FIG. 3.

Next, such a scheme is employed that at the conditions inputting step (S25) and the bidding desired price inputting step (S26) shown in FIG. 3, one person or corporation as shown in Table 8 can input a plurality of conditions at a time and select only one of those transactions concluded fast and cancel the others.

**Table 8**

| Registration of bidding conditions | | | | |
|---|---|---|---|---|
| | ID No. | 99999 | Name | YAMADA Tarou |
| Commodity Maker No. | Name | Product name | Product details | Purchase desired price |
| s―1 | ony | vlo/400 | | ¥190,000 |
| s―2 | ony | vlo/300 | | ¥250,000 |
| s―3 | ony | vlo/450 | | ¥270,000 |

There have been provided three rows of input columns, to input desired conditions in these columns according to a desired number of inputs of one through three. For example, if one desires to purchase a commodity, he inputs its maker, commodity type, color, and performance in details and his desired purchase price finally. As for prices, different commodities or services of various makers correspond to different amounts which are valid for bidders.

The bidding conditions registered in groups are given symbols to indicate them, for example symbol S is given as the commodity number. If one of those bids is concluded at the transaction conclusion step S6 in FIG. 3, retrieval is made for any inputs other than the concluded desired condition that are registered in groups. In this case, retrieval is made for any conditions having the same symbol S as the commodity number. As for the retrieval method, if the number of conditions becomes larger, their group registration is given an index formed in another file to thereby retrieve that index, or to one desired condition registered in a group is added specification information such as a commodity number concerning other desired conditions contained in the group, so that when that one desired condition is concluded in transaction, that specification information is referenced to retrieve the other desired conditions to cancel them for fast retrieval.

If, on the other hand, a plurality of bids is selected from their list to register response bids, each of the listed bids is provided with a selection button, so that when it is pressed, the response bid is registered and, at the same time, the display screen of detailed bid contents for new bid responding and the input screen for inputting of the number of articles are presented for necessary inputting.

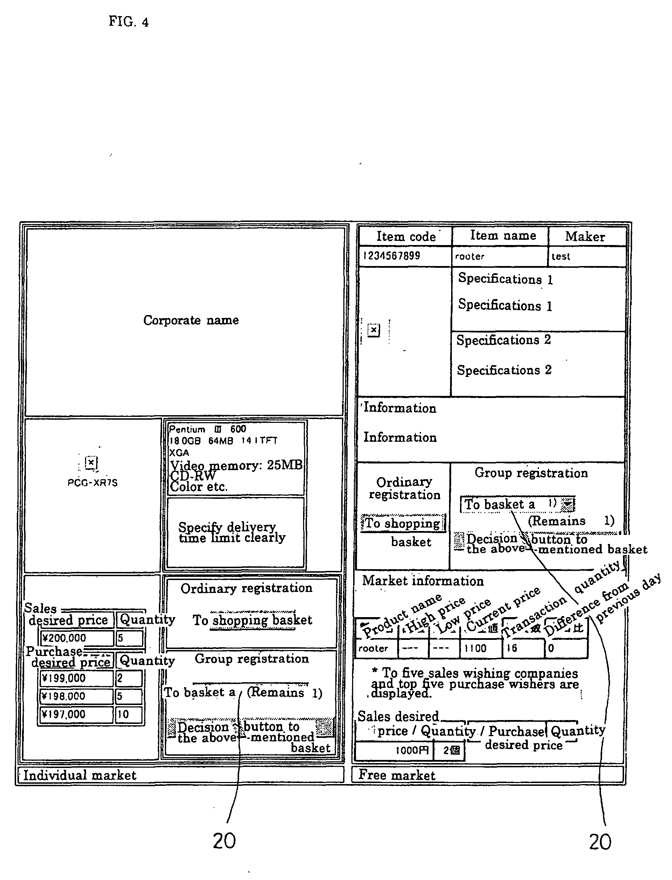

If those response bids are registered in groups, as shown in FIG. 4, an input column 20 is provided to select a group for group registration, so that when the downward arrow ▼ at the right end is pressed, a plurality of group registration destinations is indicated to select one of them. This is done so in order to accommodate a case to change the conditions to make another group registration in order to respond to a plurality of bids.

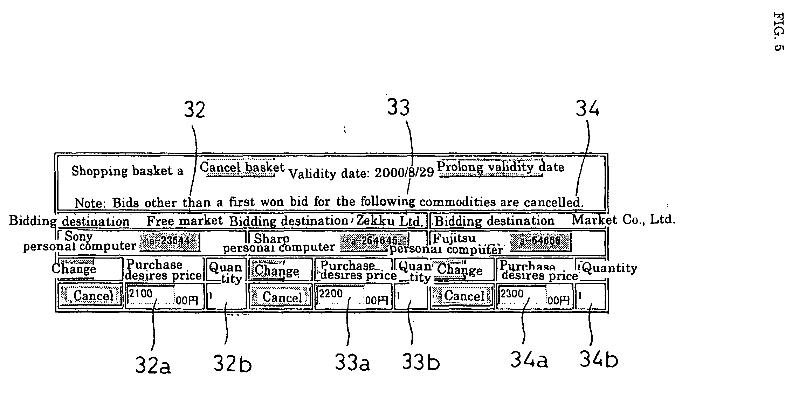

Next, the input screen is shown in FIG. 5 wherein a response-bid price and a number of articles are input for bids registered in groups. A reference number 31 indicates a column to input a group registration type, reference numerals 32, 33, and 34 respectively indicate contents of three responding bids. These three are respectively provided with purchase desired price indicating columns 32a, 33a, and 34a and numeral indicating columns 32b, 33b, and 34b.

Also, it is possible to, in place of the selection buttons for group registration shown in FIG. 4, simultaneously display a list screen for a plurality of bids and a display screen for group registration shown in FIG. 5 in one monitor screen to use a mouse or other inputting member to thereby one of the listed bids and register it. In this case, when one of the listed bids is selected by the mouse etc., it is temporarily saved in a cache memory when the mouse starts on the monitor with its hold button as input, so that when the hold button of the mouse is released on the display screen for group registration at a moving destination, the bid data temporarily saved is input in the group registration column of the moving destination of the mouse.

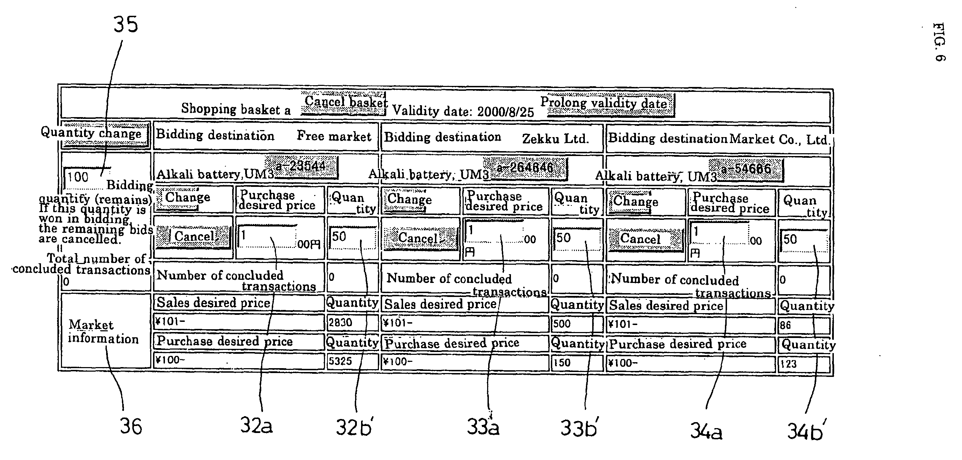

Although the number of articles to be dealt with has been one in FIG. 5, in a case of a free market for purchasing a mass-consumable such as dry cells, a transaction may be concluded for a large number of articles at a time and, further, as shown in FIG. 6, the quantity need not be input for each of them but a total quantity may be input in the total inputting column 35 for bid responding. The quantity columns 32b', 33b', and 34b' indicate the same quantities as the total inputting column 35 but their contents can be changed, in such a manner that a total of the quantity columns 32b', 33b', and 34b' may not be lower than a quantity in the total inputting column 35 and, if it is less than that, re-inputting is to be made and also the number of inputs for each of the quantity columns 32b', 33b', and 34b' may not be more than a quantity in the total inputting column 35 and, if it is more than that, re-inputting is to be made to avoid cancellation after transaction conclusion.

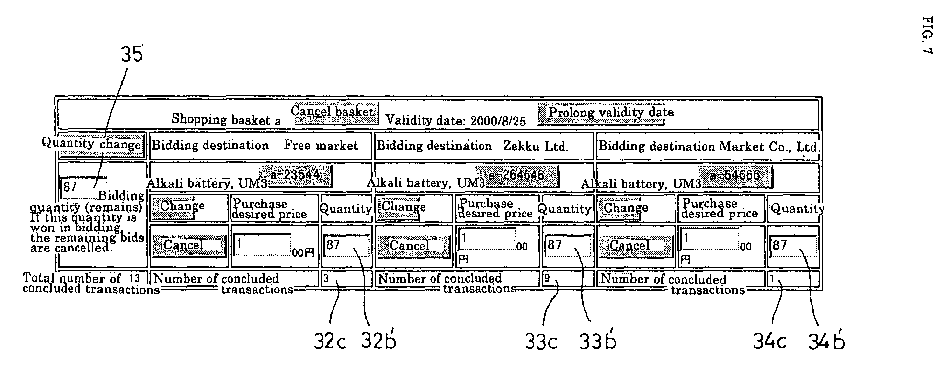

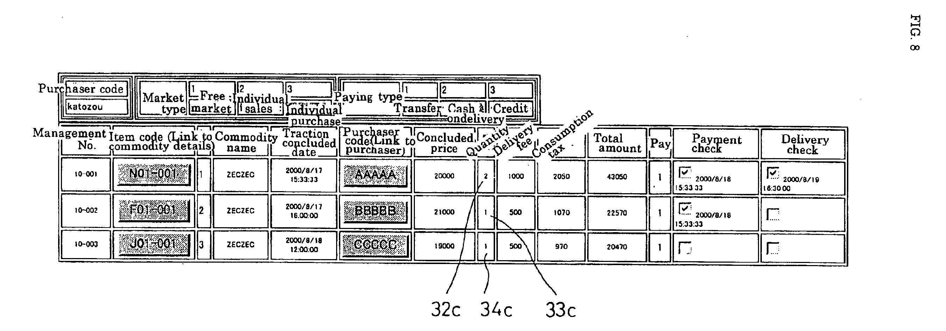

There is also such case where each of the bidding destinations may conclude a transaction partially or for a small number of articles as shown in FIG. 7 or, as shown in FIG. 8, the transaction conclusion screen is separately formed to display columns 32c, 33c, and 34c which indicate the number of transaction-concluded articles.

With this, if there are any conditions registered in another group, those conditions are cancelled and then the transaction-concluded desired conditions are posted at step S7 shown in FIG. 2.

Although for convenience in explanation, a case where a transaction-concluded condition is selected from a total number of inputs in the input column to cancel the other conditions, the number of simultaneous inputs is not limited and the number of concluded transactions that can be decided is not limited to one, so that exclusion of the transaction-concluded condition is repeated as many times as a number of the number of a plurality of input conditions minus 1 to thereby cancel the transaction when the last one input condition is left. For example, three rows of buttons in the next page can be added to the above-mentioned three rows of input screens to repeat inputting three at a time until the registration button is pressed. Also, to make two transactions or more in place of single transaction, a column can be added to input a numeral other than 1.

Also, bids which are added with a number of articles or quantity as a transaction condition may be treated as one bid or as an independent bid for a certain number of article or quantity, to treat it when it is input in its descriptive group registration, so that when a transaction is concluded for that group registration, the concluded number of articles of bids can be cancelled from the response bid waiting list to thereby display the number of articles in inventory again. This can be applied to the bidding system by conventional net mall.

The following will describe individual bidding utilizing group registration.

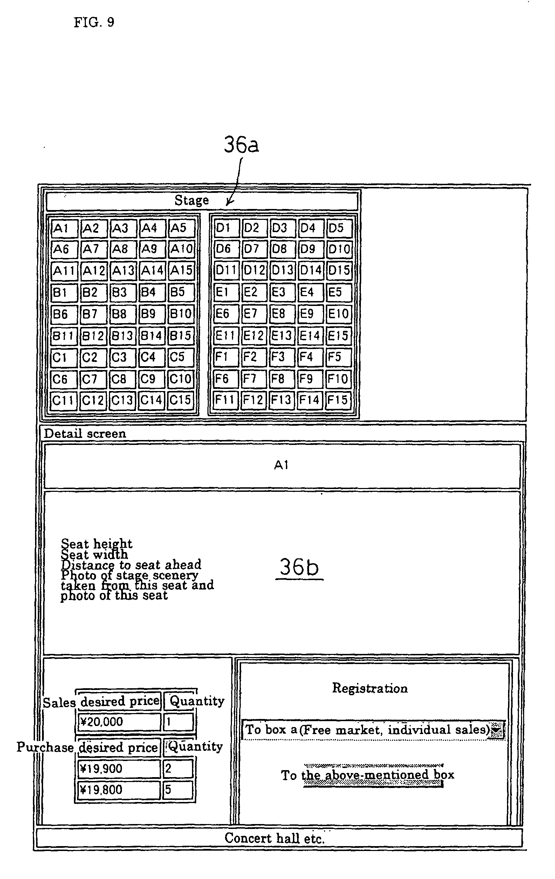

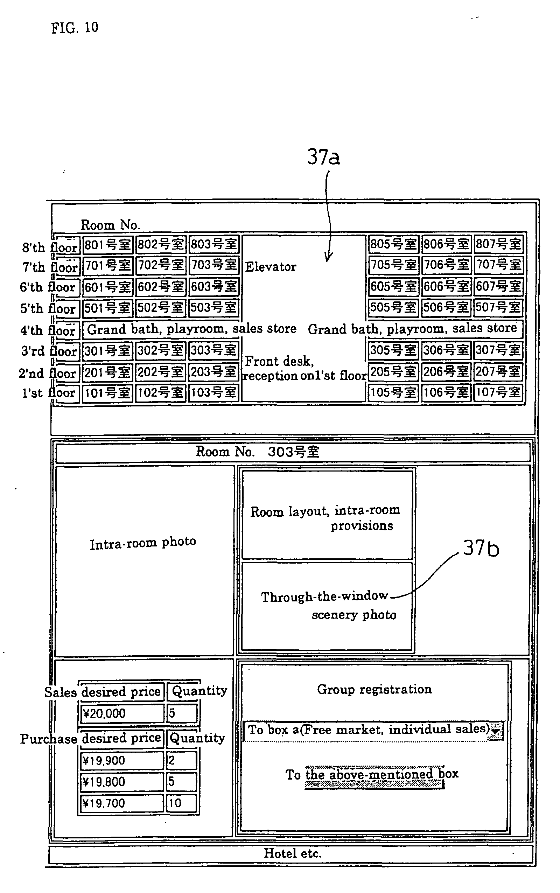

If a sales subject bid in a communication network is a concert hall, a hotel room, or a subdivision house or an apartment room, all of the planar layout 36a of the hall seats shown in FIG. 9 and a room layout 37a for each floor of the building shown in FIG. 10 are preferably displayed, so that when each frame of input button for the seat number or room number can be selected to display the details, i.e. various angled photos and computer graphics of, for example, a concert hall as viewed from each seat in the display frame 36b or through-the-window landscape photos of each room of, for example, a hotel according to a time zone or the layout and interior photos as well as front photos in the display frame 37b to check the state of lodging facilities.

Specifically, for the concert hall seats, the photos should be taken at a level of a photographer's height of 175 cm and also at levels in a A6 as well as other seats A1, A2, and A3. Also, the seat height, width, and back-and-forth-wise and lateral inter-seat distances should be displayed, and also, photos should be taken when a 175-cm long person is seated and when adjacent persons are seated in, for example, A6 and A8 seats with a seat A7 therebetween and then given as information. Also, transportation means such as a train, airplane, ship, etc. need not have seat-specific information for ordinary seats but should have photos etc. of specified seats or first-class seats in a place.

Further, as for a date retrieved for displaying a list, in a case of concert hall seats, an auction etc. maybe retrieved according to the selection items such as a day shift or night shift on the day of the concert and, in a case of hotel lodging, airplane or train with unspecified utilization time, retrieval may be made by specifying only utilization date, for example, August 2nd or 3rd or, further, in a case of a train or airplane with a restricted utilization time to be followed, such items should be specified as, for example, Shirasagi 20th, from Nagoya to Kanazawa for departure at 10:00, service No., and a flight number of, for example, from Nagoya to Tokyo, Zenniku flight No. 752 for departure at 10:00.

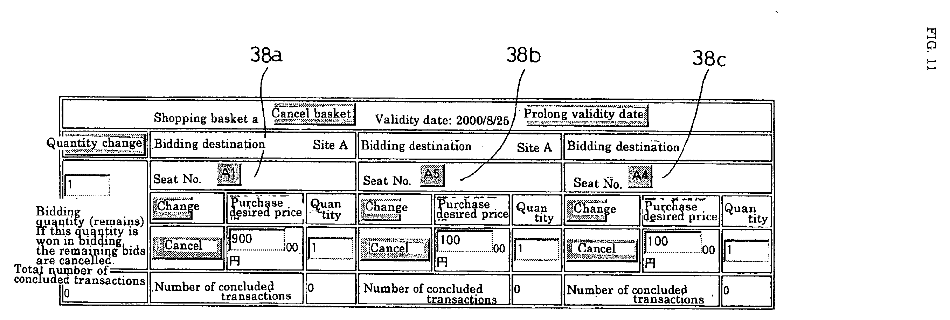

FIG. 11 shows a list screen in which response bids for bids for concert hall seats are registered in groups, wherein bids are made for different three seats of 38a, 38b, and 38c.

Thus, for popular public performance or entertainment, a typical auction type may be utilized or, if expensive tickets may not be sold easily, they can be set at a relatively highprice beforehand for sale. For public performance or entertainment not so popular, on the other hand, tickets may be left unsold but be discounted in price to thus prevent the concert hall from becoming sparse in many cases. Also, such a sales system may be utilized not only between general audience and a ticket seller but also between a ticket seller and a concert sponsor.

With this, such a sales system may be used along with, for example, a POS system usually used for sale, so that if a bid other than those for usual sales from among a group registration list containing usual sales is concluded in transaction, trial for bringing a usual-sale commodity to the cash register to buy it may encounter a warning of "sold" by use of the POS system, which already has feedback of the sales results in the network, or the commodity may be pulled down from the shelf, to thereby use network sales along with over-the-counter sale, thus increasing the sale routes.

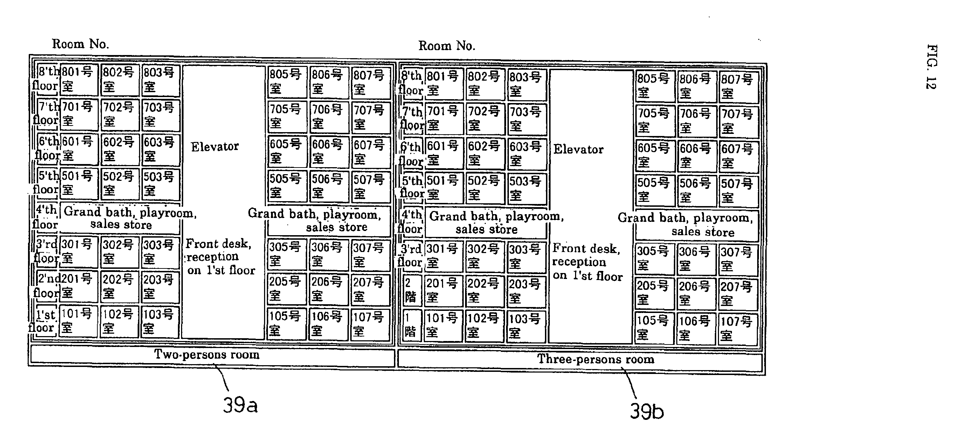

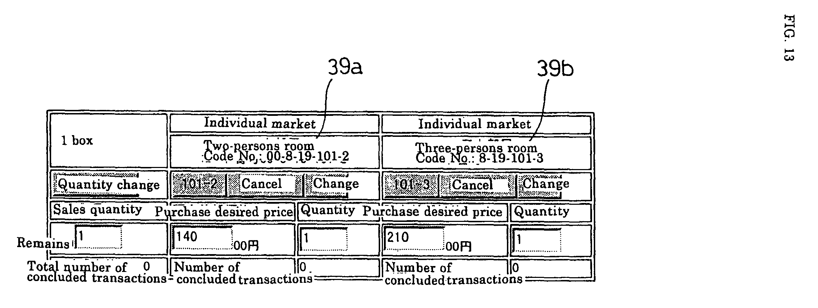

Also, FIG. 12 shows a list of bids made by the side providing lodging facilities such as hotels. A hotel may have various rooms accommodating different number of customers and different prices. For example, the rooms may be displayed for two-persons rooms 39a and three-persons rooms 39b separately, so that they can be sold for ¥14,000 per head for the two-men room and for ¥21,000 for three persons in group registration of the two-persons room 39a and the three-persons room 39b as shown in FIG. 13.

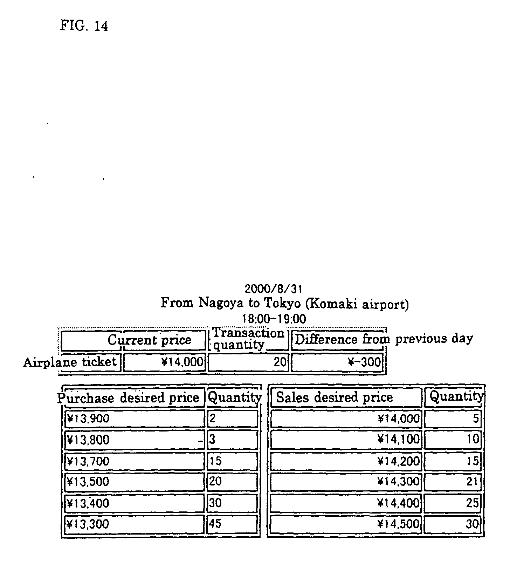

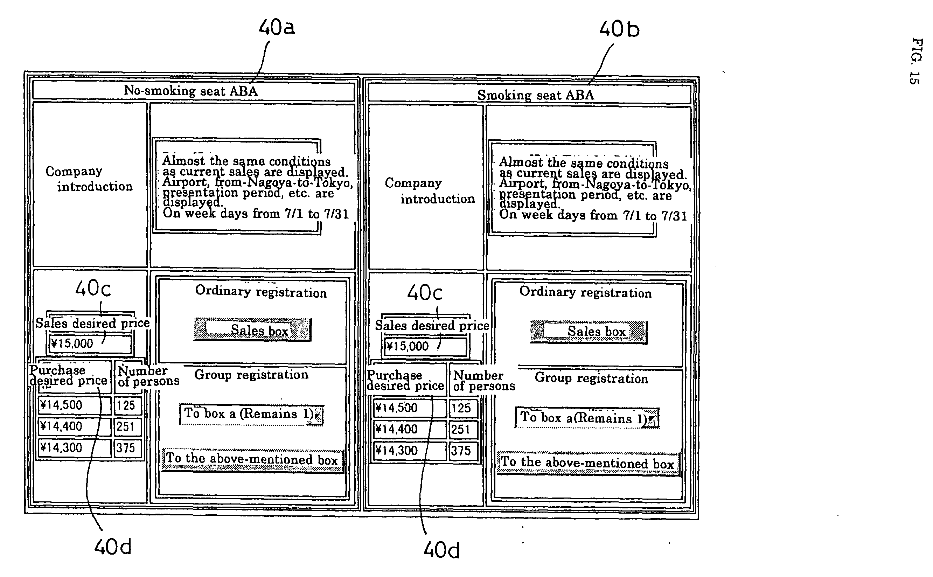

FIG. 14 shows a list of bidding states of airplane tickets as a transportation means including airplanes, ships, and trains, in which the top columns indicate a transaction-concluded price, a number of sales articles, a price difference from the previous day as a reference and the lower left column indicates a buying desired price or purchase desired price and also the lower right column indicates a selling desired price or sales desired price. Also, as the unified condition of the free market, for example, a departure time is supposed to be 18:00 through 19:00 with a general seat from Nagoya to Tokyo. With this, as shown in FIG. 15, no-smoking seats 40a and smoking seats 40b are registered in groups, to input sales desired prices in the input columns 40 C respectively. A reference numeral 40d indicates a list of purchase wishing bids.

Also, if, for example, a free market is provided with an expanded time range of 05:00 through 22:00 of August 31st, the airline company can sell preferentially such times that have relatively many vacant seats. Further, such a market system as shown in FIG. 14 may be used in sales, to contain in groups registration those bids registered in the market system.

Thus, by a sale system in a communication network according to Claim 1 of the invention, a mediator in the network receives bids for an arbitrary purchase desired price for an arbitrary desired commodity from a purchase wisher and also bids for an arbitrary sales desired price for an arbitrary desired commodity from a sales wisher at the same time as posting or presenting the results of both parties to them, wherein the conditions of the purchase or sales wisher whichever earlier in bidding are always announced, so that if the conditions of the later bidding wisher match with the above-mentioned conditions, a transaction is concluded to always announce that transaction conclusion information, and the mediator receives changes in the sales wisher's unconcluded conditions and those in the purchase wisher's unconcluded conditions to announce the unconcluded bids in order to continuously receive responding bids of other purchase and sales wishers and thereby always enable participation under one's own desired conditions, thus eliminating the bidding period in contrast to general auctions to give chances to the selecting purchase and sales wishers to sell and purchase commodities at the lowest purchase price and the highest sales price as much as possible respectively. Also, the later bidding wisher can win a bid immediately by providing an lowest desired price acceptable in transaction conclusion and so need not consecutively monitor the bidding state until the bid is expired.

In particular, in contrast to general auctions where earlier bidding wishers are restricted in changing the conditions, by the invention, it is possible to change the bidding conditions to one's satisfaction in participation of bids for his desired and acceptable price and, further, a sales wisher can use besides the above-mentioned sales system such a sales method, for example, an over-the-counter sales system, to correct his bidding conditions if the number of articles is decreased due to sales or increased by arrival of commodities to thereby expand the sales route, thus facilitating the participation of the sales wishers. Further, both of a sales and purchase wishers make response bids for one kind of commodities, to form a fair market price in many cases.

### Explanation of reference numerals

- 20: registration group inputting column,
- 31: registration group type column,
- 32, 33, 34: bid contents display column,
- 32a, 33a, 34a: purchase desired price inputting column,
- 32b, 33b, 34b: quantity inputting column.

## Claims

1. A sales system in a communication network in which a mediator in said communication network receives from a purchase wisher a bid for an arbitrary desired commodity for an arbitrary desired purchase price while the mediator receives from a sales wisher a bid for an arbitrary desired commodity for an arbitrary desired price at the same time as posting or presenting results of said bids of both parties to said both parties, wherein:
conditions of said purchase or sales wisher whichever has bid earlier are always announced, so that if conditions of another wisher who bid later matched with said conditions, a transaction is concluded and conclusion information thereof is always announced and, said mediator receives changes to said sales wisher's unconcluded conditions and changes to said purchase wisher's unconcluded conditions to announce bids of thus changed conditions and unconcluded bids in order to continuously receive bids responding for said bids from other purchase and sales wishers, thus always enabling participation under desired conditions.

2. A sales system in the communication network according to Claim 1, wherein a number of article is added to said desired conditions, to continue bidding for articles as many as a number obtained by subtracting a transaction-concluded number from a number of bids.

3. A sales system in the communication network according to Claim 1, wherein upon said transaction conclusion, said mediator post said transaction conclusion to said both parties who have acquired a transaction right and collects as a commission a predetermined percentage of a transaction-concluded price from a sales wisher who has acquired a selling right.

4. A sales system in a communication network in which a mediator in said communication network receives from a purchase wisher a bid for an arbitrary desired commodity for an arbitrary purchase desired price while said mediator receives from a sales wisher a bid for an arbitrary desired commodity for an arbitrary desired sales price at the same time as posting or presenting results of said bids to both parties, wherein:
bidding conditions of said sales or purchase wisher are unified in terms of an arbitrary condition, to thereby make bids simultaneously for one or plurality of purchase or sales desired prices.

5. A sales system in the communication network according to Claim 1 in which said mediator in the communication network receives from a purchase wisher a bid for an arbitrary desired commodity for an arbitrary desired purchase price while said mediator receives from a sales wisher a bid for an arbitrary desired commodity for an arbitrary desired sales price at the same time as posting or presenting results of said bids of both parties to said both parties, wherein:
a plurality of purchase or sales wishing bids are correlated to said purchase or sales wisher respectively and registered, so that if an arbitrary number of bids of said plurality of bids are concluded in transaction, the other bids registered than said transaction-concluded bids are cancelled.

6. A sales system concerning securities dealing in a communication network in which a mediator in said communication network receives from a purchase wisher a bid for an arbitrary desired commodity for an arbitrary desired purchase price while said mediator receives from a sales wisher a bid for an arbitrary desired commodity for an arbitrary desired sales price at the same time as posting or presenting results of said bids of both parties to said both parties, wherein:
a plurality of purchase or sales wishing orders are correlated to said purchase or sales wisher respectively and registered, so that if an arbitrary number of orders of said plurality of orders are concluded in transaction, the other orders registered than said transaction-concluded orders are cancelled.
